# EUROPÄISCHE PATENTSCHRIFT

(11) **EP 0 854 475 B1**
(45) Veröffentlichungstag und Bekanntmachung des Hinweises auf die Patenterteilung: **26.09.2001**
(21) Anmeldenummer: 98890013.0
(22) Anmeldetag: 15.01.1998
(51) Int. Cl.: G11B 7/00, G11B 7/24, G11B 7/26

(54) **Compact Disk**
Compact disc
Disque compact

(30) Priorität: 17.01.1997 AT 2897
(43) Veröffentlichungstag der Anmeldung: 22.07.1998
(73) Patentinhaber: Sony DADC Austria AG, 5081 Anif (AT)
(72) Erfinder: Daum, Dieter, Dipl.-Ing., 5440 Kuchl (AT)
(74) Vertreter: Kliment, Peter

(56) Entgegenhaltungen:
- DE-A- 4 302 384
- US-A- 4 726 006
- US-A- 4 961 077

## Beschreibung

Die Erfindung bezieht sich auf eine Compact Disk gemäß dem Oberbegriff des Anspruches 1.

Bei bekannten derartigen Compact Disks, die meist für Single-Auskopplungen aus üblichen Compact Disks, bei denen sich eine reflektierende, Informationen tragende Schicht nahezu über die gesamte Trägerschicht erstreckt, erstreckt sich eine reflektierende Schicht nur über einen zentrumsnahen Bereich. Dabei trägt im wesentlichen die gesamte reflektierende Schicht Informationen in Form von Erhebungen und Vertiefungen, die mittels einer Laserstrahles abgetastet werden können. Dabei sind die zur Aufzeichnung von Informationen vorgesehenen Erhöhungen und Vertiefungen meist in die Trägerschicht eingearbeitet und mit der reflektierenden Schicht überzogen, die diesen Erhebungen und Vertiefungen folgt.

Bei solchen bekannten Compact Disks konnte nur die von der Trägerschicht abgekehrte Seite mit Beschriftungen und Symbolen mittels einer gegebenenfalls mehrlagigen Farbschicht, z.B. einem Mehrfarbendruck, versehen werden. Die freie äußere Seite der Trägerschicht kann bei den bekannten Lösungen in deren äußeren Bereich, der keinerlei mittels eines Laserstrahles abtastbaren Informationen enthält, für die Anbringung von Aufschriften, Symbolen oder Bilder nicht verwendet werden.

Es wurden auch schon Compact Disks der eingangs erwähnten Art bekannt, bei denen Teile der ursprünglich runden Trägerschicht weggeschnitten wurden, wobei diese Einschnitte nahe an den äußeren Rand des mit einem Laserstrahl abtastbaren und mit Informationen versehenen Bereichs heranreichen. So wurden z.B. herz- oder sternförmige Compact Disks bekannt, bei denen sich die reflektierende Schicht im wesentlichen bis zum äußeren Rand der ausgeschnittenen Disk erstreckt.

Bei diesen sogenannten "Shaped Disks" ergibt sich allerdings das Problem, daß diese eine erhebliche Unwucht aufweisen, die zu einer hohen Belastung der mit hoher Drehzahl arbeitenden Abspielgeräte führen.

Durch die US A 4 726 006 wurde eine Compact Disc vorgeschlagen, bei der eine kreisrunde reflektierende und Informationen tragende Schicht von einer ringförmigen Zone umgeben ist, die eine mattierte metallisierte Schicht oder mit einem andersfarbigen Aufdruck versehen ist.

Weiters wurde durch die DE 43 02 384 A eine Compact Disc vorgeschlagen, bei der eine sich nahezu über die gesamte Trägerschicht erstreckende reflektierende und Informationen tragende Schicht vorgesehen ist und bei der ein Aufdruck vorgesehen ist, der eine über den Umfang der Trägerschicht sich ändernden Abstand vom äußeren Rand der Trägerschicht aufweist.

Mit den beiden letztgenannten bekannten Compact Disks entsteht immer der Eindruck einer kreisrunden Scheibe, nicht aber der Eindruck einer "geschnittenen Disk".

Ziel der Erfindung ist es, diese Nachteile zu vermeiden und eine Compact Disk der eingangs erwähnten Art vorzuschlagen, deren äußere Erscheinungsform in weiten Grenzen frei gestaltet werden kann.

Erfindungsgemäß wird dies bei einer Compact Disk der eingangs erwähnten Form durch die kennzeichnenden Merkmale des Anspruches 1 erreicht.

Durch die vorgeschlagenen Maßnahmen ist es möglich den optischen Eindruck einer "Shaped Disk" zu erreichen, ohne daß dies mit einer Unwucht der Compact Disk verbunden ist. Dazu ist es lediglich notwendig, die reflektierende Schicht entsprechend zu gestalten.

Dabei kann eine sich im wesentlichen bis zum äußeren Rand der Trägerschicht erstreckende reflektierende Schicht mittels eines Laserstrahles entsprechend dem gewünschten Design in den äußeren Bereichen weggebrannt und die Trägerschicht samt der verbleibende reflektierenden Schicht mit durchsichtigem Schutzlack und einer durchsichtigen Deckschicht abgedeckt werden. Die Oberschicht kann dabei zweckmäßigerweise in den nicht von der reflektierenden Schicht abgedeckten Bereichen frei von Beschriftungen und Aufdrucken gehalten werden. Dadurch bestimmt die reflektierende Schicht, die sich abschnittweise über den Informationen tragenden Bereich radial nach außen erstreckt, im wesentlichen das äußere Erscheinungsbild der Disk, das dann dem einer "Shaped Disk" entspricht.

Durch die Merkmale des Anspruches 2 ist es möglich nicht nur die von der Trägerschicht abgekehrte Oberschicht für die Anbringung einer Beschriftung, von Symbolen oder Bildern zu nutzen, sondern es können auch Aufdrucke und Beschriftungen vorgesehen werden, die von der zweiten Seite der Compact Disk her sichtbar sind. Dies war bei den bisherigen Lösungen nicht möglich. Unter "Farbschicht" ist in diesem Zusammenhang eine Schicht zu verstehen, wie sie sich z.B. bei einem Aufdruck ergibt, d.h., daß es sich um keine durchgehende oder homogen gefärbte Schicht handeln muß, sondern um eine Vielzahl von örtlich begrenzten sehr dünnen Farbschichten, wie sie sich z.B. bei einem Mehrfarbendruck ergeben, handeln kann, wobei es auch durchaus Abschnitte geben kann, in denen solche Farbaufträge fehlen.

Durch die Merkmale des Anspruches 3 ist die Anbringung von von beiden Seiten der Compact Disk her lesbaren Beschriftungen auf einfache Weise möglich, wobei eine Beschädigung der von einem Laserstrahl abtastbaren in die reflektierende Schicht eingeschrie benen Informationen ausgeschlossen ist, da eben an dieser Seite der Schutzlack-Schicht kein Aufdruck erfolgt.

Durch die Merkmale des Anspruches 4 wird die reflektierende Schicht auf den die Informationen tragenden Bereich beschränkt. In diesem Fall wird dann das äußere Erscheinungsbild der erfindungsgemäßen Disk durch die Oberschicht bestimmt, deren äußerer Rand eben in einem sich über den Umfang ändernden radialen Abstand vom äußeren Rand der Trägerschicht verläuft.

Die Erfindung wird nun anhand der Zeichnung näher erläutert. Dabei zeigen:
Fig. 1 schematisch und nicht maßstäblich einen Querschnitt durch eine Ausführungsform einer erfindungsgemäßen Compact Disk,
Fig. 2 eine Ansicht der Unterseite einer weiteren Ausführungsform einer erfindungsgemäßen Compact Disk,
Fig. 3 und 4 Vorder- und Rückseite einer weiteren Ausführungsform einer erfindungsgemäßen Diskette.

Bei einer Compact Disk ist eine Trägerschicht 1, die aus einem meist glasklaren, gegebenenfalls auch leicht getönten Material, wie z.B. Polycarbonat hergestellt ist vorgesehen, wobei diese eine zentrale Bohrung 2 aufweist.

In dem die zentrale Bohrung 2 unmittelbar umgebenden Bereich ist auf die Trägerschicht 1 eine Ausgleichsschicht 3 aufgebracht, die z.B. eine Beschriftung aufweisen kann. Eine solche Beschriftung wird zweckmäßigerweise in Spiegelschrift von der Trägerschicht 1 weg aufgebaut und kann, wie bei einem Mehrfarbendruck üblich, aus mehreren Lagen bestehen.

Dabei kann diese Ausgleichsschicht 3 auch ausschließlich aus einer Beschriftung bestehen. Sie kann aber auch aus einem durchgehend gefärbten transparenten Material bestehen.

Diese Ausgleichsschicht 3 ist, wie üblich von einer reflektierenden Schicht 4 umgeben, die auf der Trägerschicht 1 aufgebracht ist. Diese überdeckt an ihrer der Trägerschicht 1 zugekehrten Seite mit Informationen in Form von mittels eines Laserstrahles abtastbaren Erhebungen und Vertiefungen 5. Dabei ist der äußere Durchmesser dieses Informationen tragenden Bereiches erheblich kleiner als der äußere Durchmesser der Trägerschicht 1.

Die reflektierende Schicht 4 und die Trägerschicht 1 in ihrem außerhalb des mit Informationen beschriebenen Bereiches 4' liegenden Bereich 6 sind mit einer Schutzlack-Schicht 7 abgedeckt.

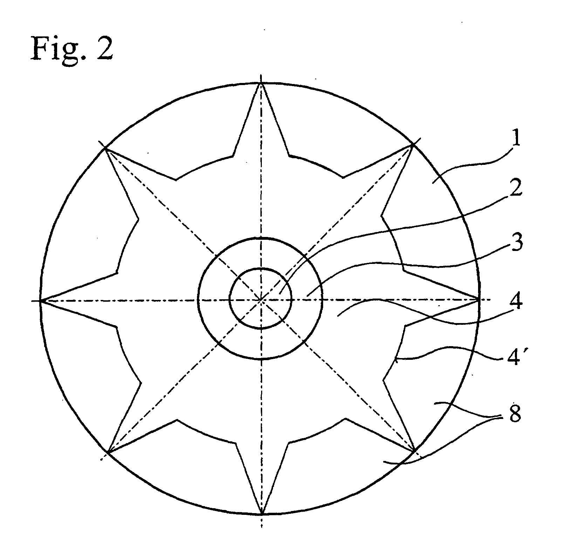

Wie aus der Fig. 2 ersichtlich, kann sich die reflektierende Schicht 4 auch über den mit Informationen beschriebenen Bereich 4' hinaus bis zum Rand der Trägerschicht 1 erstrecken. Dabei sind allerdings Bereiche 8 der reflektierenden Schicht mittels einer beim Aufdampfen der reflektierenden Schicht 4 auf die Trägerschicht 1 verwendeten Maske frei von einem Materialauftrag gehalten, sodaß die verbleibende reflektierende Schicht ein entsprechendes Muster ergibt, das beim in der Fig. 2 dargestellten Beispiel eine Art Stern ergibt, aber grundsätzlich frei gestaltet werden kann. Dadurch ergibt sich der Eindruck einer "Shaped Compact Disk", insbesondere wenn die übrigen Schichten in den von der gesamten reflektierenden Schicht 4 nicht abgedeckten Bereichen aus glasklarem oder nur leicht getönten Material hergestellt sind.

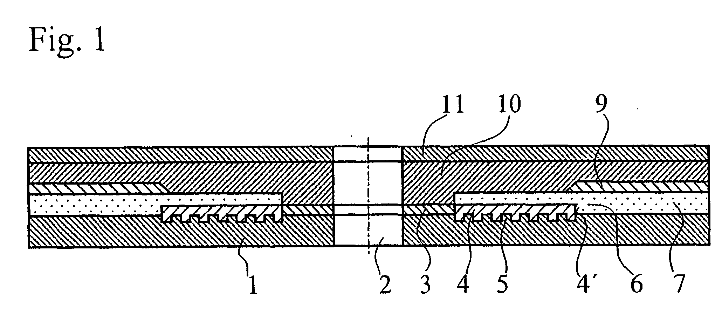

Beim in der Fig. 1 dargestellten Beispiel ist der außerhalb des mit Informationen beschriebenen Bereich 4' liegende Bereich der Schutzlack-Schicht 7 mit einer ringförmigen Farbschicht 9 versehen, die ebenfalls durch eine in Spiegelschrift von der Schutzlack-Schicht 7 weg aufgebaute Beschriftung gebildet sein kann, die auf die von der Trägerschicht 1 abgekehrte Seite der Schutzlack-Schicht 7 aufgedruckt ist und daher von der Seite der Trägerschicht 1 her lesbar ist.

Diese äußere ringförmige Farbschicht 9 ist jedoch nicht unbedingt erforderlich und kann auch aus einem mehr oder weniger homogen gefärbten und gegebenenfalls auch transparenten Material hergestellt sein.

Diese äußere ringförmige Farbschicht 9, die Schutzlack-Schicht 7 und die Ausgleichsschicht 3 sind von einer Deckschicht 10 überdeckt, die aus glasklarem Material aber auch aus gefärbtem, transparentem Material hergestellt sein kann.

Auf der Deckschicht 10 ist mit einer gegebenenfalls Beschriftungen, Symbole oder Bilder aufweisenden Oberschicht 11 versehen, die gegebenenfalls lediglich aus einer Beschriftung bestehen kann, die z.B. mehrlagig in Form eines Mehrfarbendruckes aufgebracht sein kann.

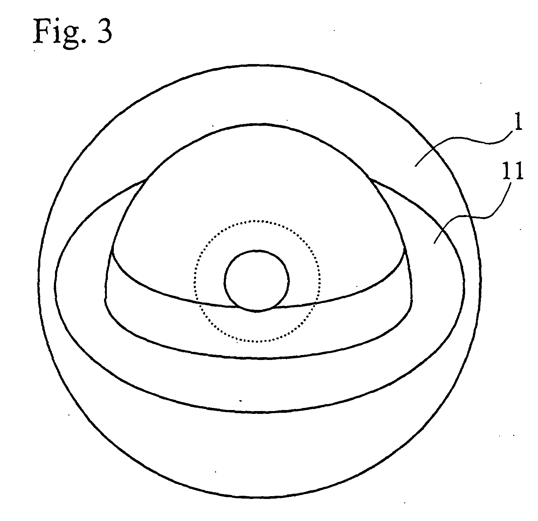

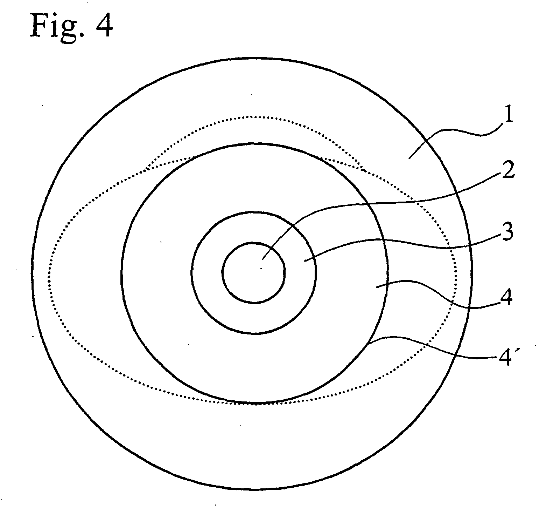

Die Fig. 3 und 4 zeigen ein Ausführungsbeispiel einer erfindungsgemäßen Compact Disk, bei der die Oberschicht 11 das Bild eines Hutes zeigt. Dabei sind die Schichten 6 und 10 aus einem transparenten gefärbten Material hergestellt, sodaß die Konturen des dargestellten Hutes auch von Seite der Trägerschicht 1 her erkennbar sind.

Die reflektierende Schicht 4 erstreckt sich bei diesem Ausführungsbeispiel lediglich über den mit Informationen beschriebenen Bereich 4', doch könnte sich diese auch bereichsweise darüber hinaus erstrecken.

## Patentansprüche

1. Compact Disk mit einer durchsichtigen Trägerschicht (1) in Form einer kreisrunden Scheibe, auf der eine reflektierende Schicht (4) aufgebracht ist, wobei ein ein Mittelloch (2) unmittelbar umschließender ringförmiger Zentralbereich (3) vorgesehen ist, der gegebenenfalls einen Aufdruck aufweist und von einem diesen umgebenden Bereich (4') der reflektierenden Schicht (4) umschlossen ist, der Informationen in Form von Erhöhungen und Vertiefungen (5) trägt und dessen größter Durchmesser erheblich kleiner als der äußere Durchmesser der Trägerschicht (1) ist, und die reflektierende Schicht (4) an der von der Trägerschicht (1) abgekehrten Seite mit einer durchsichtigen Schutzlack-Schicht (7) abgedeckt und weiters eine den ringförmigen Zentralbereich (3) und die Schutzlack-Schicht (7) überdeckende gegebenenfalls Farbstoffe enthaltende Deckschicht (10) vorgesehen ist, die von einer Beschriftungen und Zeichen aufweisenden, Oberschicht (11) überdeckt ist, **dadurch gekennzeichnet, daß** der äußere Rand der reflektierenden Schicht (4) in einem sich über den Umfang ändernden radialen Abstand vom äußeren Rand der kreisrunden Disk verläuft.

2. Compact Disk nach Anspruch 1, **dadurch gekennzeichnet, daß** in dem äußeren Ringbereich zwischen dem Informationen tragenden Bereich (4') der reflektierenden Schicht (4) und dem äußeren Rand der Trägerschicht (1) eine optische Informationen, z.B. Beschriftungen oder Symbole tragende, gegebenenfalls mehrlagige äußere ringförmige Farbschicht (9) zwischen der Schutzlack-Schicht (7) und der Deckschicht (10) angeordnet ist.

3. Compact Disk nach Anspruch 2, **dadurch gekennzeichnet, daß** die äußere ringförmige Farbschicht (9) von der Schutzlack-Schicht (7) beginnend aufgebaut ist und in Spiegeldarstellung dargestellte Beschriftungen und bzw. Symbole oder Bilder aufweist, die von der freien Außenseite der Trägerschicht (1) her normal lesbar sind.

4. Compact Disk nach Anspruch 1, **dadurch gekennzeichnet, daß** sich der Informationen tragende runde Bereich (4') im wesentlichen über die gesamte reflektierenden Schicht (4) erstreckt. (Fig. 4)

## Claims

1. Compact disc with a transparent substrate (1) in the form of a circular disc, to which a reflective layer (4) is applied, whereby an annular central area (3) immediately surrounding a centered bore (2) is provided, said central area (3) possibly carrying an imprint and being enclosed by an area (4') of the reflective layer (4) which surrounds said central area (3) and whose largest diameter is significantly smaller than the outer diameter of the substrate (1), and to which information in the form of elevations and depressions (5) are written on its side facing the substrate (1), whereby the reflective layer (4) is covered by a transparent layer (7) of protective varnish on its side facing away from the substrate (1), and furthermore a cover layer (10), which covers the annular-shaped central area (3) and the layer (7) of protective varnish, is provided, which in turn is covered by a top layer (11) which comprises writing and symbols, **characterized in that** the radial distance between the outer border of the reflective layer (4) and the outer rim of the circular disc varies along the circumference.

2. Compact disc according to claim 1, **characterized in that** an optical information, such as a possibly multi-layer, annular outer colour coat (9) carrying writing and symbols, is arranged between the layer (7) of protective varnish and the cover layer (10) in the outer annular area between the information-carrying area (4') of the reflective area (4) and the outer rim of the substrate (1) .

3. Compact disc according to claim 2, **characterized in that** the outer annular-shaped colour coat (9) is applied on top of the layer (7) of protective varnish and comprises writing, or symbols or pictures respectively, applied as mirror images, which are readable in a normal way when viewed from the free outer side of the substrate (1).

4. Compact disc according to claim 1, **characterized in that** the round area (4') which carries information extends substantially over the entire reflective area (4). (Fig. 4)

## Revendications

1. Disque compact possédant une couche de support transparente (1) sous la forme d'un disque circulaire et sur laquelle est disposée une couche réfléchissante (4), et dans lequel il est prévu une partie centrale de forme annulaire (3), qui entoure directement un trou central (2), possède une impression et est entourée par une partie (4') de la couche réfléchissante (4), qui entoure cette partie centrale et porte des informations sous la forme d'élévations et de renfoncements (5) et dont le diamètre maximum est nettement inférieur au diamètre extérieur de la couche de support (1), et la couche réfléchissante (4) est recouverte, sur la face tournée à l'opposé de la couche de support (1), par une couche opaque d'une laque de protection (7), et en outre il est prévu une couche de revêtement (10) qui recouvre la partie centrale de forme annulaire (3) et la couche de laque de protection (7), contient éventuellement des colorants et est recouverte par une couche supérieure (11) qui comporte des inscriptions et des signes, **caractérisé en ce que** le bord extérieur de la couche réfléchissante (4) s'étend à une distance radiale, qui varie sur la périphérie, du bord extérieur du disque circulaire.

2. Disque compact selon la revendication 1, **caractérisé en ce que** dans la partie annulaire extérieure entre la couche (4'), qui porte des informations, de la couche réfléchissante (4) et le bord extérieur de la couche de support (1) est disposée une couche extérieure colorée de forme annulaire (9), qui porte des informations optiques, par exemple des inscriptions ou des symboles et est formée de plusieurs strates et se situe entre la couche de laque de protection (7) et la couche de revêtement (10).

3. Disque compact selon la revendication 2, **caractérisé en ce que** la couche colorée extérieure de forme annulaire (9) est constituée, pour commencer, par la couche de laque de protection (7) et comporte des inscriptions et/ou des symboles ou des images, qui sont représentés sous la forme d'une représentation spéculaire et sont lisibles normalement à partir de la face extérieure libre de la couche de support (1).

4. Disque compact selon la revendication 1, **caractérisé en ce que** la partie circulaire (4'), qui porte des informations, s'étend essentiellement sur toute la couche réfléchissante (4). (Figure 4).
